# EUROPÄISCHE PATENTSCHRIFT

(11) **EP 2 460 214 B1**
(45) Veröffentlichungstag und Bekanntmachung des Hinweises auf die Patenterteilung: **06.01.2016**
(21) Anmeldenummer: 10743011.8
(22) Anmeldetag: 09.07.2010
(51) Int. Cl.: H01M 4/04, H01M 4/134, H01M 4/1395, H01M 4/66

(54) **ELEKTRODE FÜR LITHIUM-IONEN AKKUMULATOREN**
ELECTRODE FOR LITHIUM-ION ACCUMULATORS
ÉLECTRODE POUR ACCUMULATEURS LITHIUM-ION

(30) Priorität: 01.08.2009 DE 102009035745
(43) Veröffentlichungstag der Anmeldung: 06.06.2012
(73) Patentinhaber: Samsung Electronics Co., Ltd., Suwon-si, Gyeonggi-do 443-742 (KR)
(72) Erfinder: BAHR, Joerg, 24161 Altenholz (DE); CARSTENSEN, Juergen, 24146 Kiel (DE); FOELL, Helmut, 24248 Moenkeberg (DE); RIEMENSCHNEIDER, Oliver, 24159 Kiel (DE); HARTZ, Hauke, 24114 Kiel (DE); OSSEI-WUSU, Emmanuel, 24105 Kiel (DE)
(74) Vertreter: Zijlstra, Robert Wiebo Johan
(86) Internationale Anmeldenummer: PCT/DE2010/000799
(87) Internationale Veröffentlichungsnummer: WO 2011/015174

(56) Entgegenhaltungen:
- EP-A2- 1 840 247
- US-A1- 2009 042 102
- US-B1- 6 465 132
- PENG KUIQING ET AL: "Ordered silicon nanowire arrays via nanosphere lithography and metal-induced etching" APPLIED PHYSICS LETTERS, AIP, AMERICAN INSTITUTE OF PHYSICS, MELVILLE, NY, US LNKD- DOI:10.1063/1.2724897, Bd. 90, Nr. 16, 20. April 2007 (2007-04-20), Seiten 163123-163123, XP012094268 ISSN: 0003-6951
- PENG K ET AL: "FABRICATION OF SINGLE-CRYSTALLINE SILICON NANOWIRES BY SCRATCHING A SILICON SURFACE WITH CATALYTIC METAL PARTICLES" ADVANCED FUNCTIONAL MATERIALS, WILEY - V C H VERLAG GMBH & CO. KGAA, DE LNKD- DOI:10.1002/ADFM.200500392, Bd. 16, Nr. 3, 3. Februar 2006 (2006-02-03), Seiten 387-394, XP001238614 ISSN: 1616-301X
- H. FÖLL ET AL: "Si Nanowire arrays as anodes in Li ion batteries" PHYS. STATUS SOLIDI RRL, Bd. 4, Nr. 1-2, 23. Oktober 2009 (2009-10-23), Seiten 4-6, XP002609036
- LIJUAN WAN ET AL: "Preparation and surface modification of silicon nanowires under normal conditions" APPLIED SURFACE SCIENCE, Bd. 254, 7. Februar 2008 (2008-02-07), Seiten 4899-4907, XP002609037 DOI: 10.1016/j.apsusc.2008.01.142
- TAO B ET AL: "Capacitive humidity sensors based on Ni/SiNWs nanocomposites" SENSORS AND ACTUATORS B, ELSEVIER SEQUOIA S.A., LAUSANNE, CH LNKD- DOI:10.1016/J.SNB.2008.10.039, Bd. 136, Nr. 1, 2. Februar 2009 (2009-02-02), Seiten 144-150, XP025876178 ISSN: 0925-4005 [gefunden am 2008-11-05]

## Beschreibung

Die Erfindung betrifft eine Elektrode für Lithium-Ionen Akkumulatoren mit einem gegenüber Lithium-Ionen inerten Metallfilm und einer Mehrzahl auf wenigstens einer Flachseite des Films angeordneter, vom Film abstehender Silizium-Nanodrähte.

Die Leistungsfähigkeit einer wieder aufladbaren Lithium-Ionen Batterie (Sekundärbatterie oder Akkumulator; diese Begriffe werden hier wie in der Technik üblich als Synonyme verwendet, und es wird oft abkürzend von Batterie die Rede sein) wird gemessen in gespeicherter Energie pro Masse (Einheit: mAh/g) und hängt von vielen Faktoren ab.

Eine entscheidende Größe ist, wie viel Lithium in die beiden Elektroden - Anode und Kathode - pro Gramm Elektrodenmasse eingelagert werden kann. Weitere Faktoren sind die Lagerbeständigkeit (Liegedauer einer nicht belasteten Batterie), das Ausmaß der Selbstentladung, die Geschwindigkeit des Wiederaufladens und die Zyklierfähigkeit, d.h. es darf möglichst keine Änderung der Ladekapazität zwischen wiederholten Be- und Entladezyklen auftreten. Nicht zuletzt sind die Herstellungskosten, mithin also das Preis-Leistungsverhältnis, noch im marktfähigen Rahmen zu halten.

Die heute kommerziell verfügbaren Lithium-Ionen Akkumulatoren müssen in ihrer Leistungsfähigkeit und im Preis-Leistungsverhältnis noch erheblich verbessert werden, bevor ein großtechnischer Einsatz im Energiebereich möglich wird. Riesige aufkommende Märkte, die generell eine erheblich verbesserte Energiespeicher-Technologie erfordern, sind z. B. Akkus für das "Elektroauto" oder für die Energiespeicherung im Umfeld der alternativen Energieerzeugung.

Die WO 2007/027197 A2 widmet sich der Aufgabe, die Zyklierfähigkeit von Lithium-Ionen Batterien zu verbessern und schlägt hierfür eine Kathode vor, die auf einem Metallfilm (hier aus Titan und Platin gebildet) angeordnete, aufrecht stehende Nanodrähte aus einem Lithium-Cobalt-Oxid aufweist. Die Nanodrähte werden durch galvanische Abscheidung (electrodeposition) in Poren einer eigens als Template auf den Metallfilm gebrachten porösen Aluminiumoxid-Schicht gebildet, wonach das Template durch Ätzen mit NaOH oder KOH vollständig entfernt wird. Es verbleibt auf dem Metallfilm eine Mehrzahl isolierter, aufrecht stehender Nanodrähte (auch: Nanosäulen, nanorods), die definierte Durchmesser und Abstände zueinander besitzen. Man spricht auch davon, dass auf dem Metallfilm ein Nanosäulen-Array gebildet worden ist.

Das Verfahren der WO 2007/027197 A2 umfasst nach dem Bilden des Metallfilms eine Reihe von Deponierungs- und Strukturierungsschritten, was es sehr aufwendig werden lässt. Die Nanodrähte werden erst während des Verfahrens geschaffen und haften mit einem ihrer Enden direkt auf dem Metallfilm.

Für die Anode einer Lithium-Ionen Batterie schlägt die Arbeit von Chan et al. ("Highperformance lithium battery anodes using silicon nanowires", Nature Nanotechnology 3, 31 (2008)) vor, Silizium-Nanodrähte auf einem Metallfilm (charge collector) stehend anzuordnen. Es ist seit langem bekannt, dass Silizium unter Bildung von Silizium-Lithium-Verbindungen ca. 11 mal mehr Lithium pro Gramm Silizium einlagern (interkalieren) kann als eine technisch gängige Graphitanode. Mit einer Kapazität von über 4000 mAh/g liegt sie sogar noch über der von metallischem Lithium. Vorherige Versuche zur Verwendung von Silizium-Anoden sind allerdings daran gescheitert, dass praktisch keine Zyklierfähigkeit erzielt worden war. Der Grund für die extrem schlechte Zyklierfähigkeit des Siliziums liegt in der mit der Lithium-Einlagerung verbundenen Volumenausdehnung des Siliziums um einen Faktor 4. Die dabei auftretenden mechanischen Spannungen sind so groß, dass das Material regelrecht pulverisiert wird.

Die Arbeit von Chan et al. zeigt die grundsätzliche Lösung des Problems auf: man lässt Silizium Nanodrähte mit bekannten Techniken (hier: Liquid-Vapour-Solid, LVS) auf z.B. einem Stahlsubstrat aufwachsen. Die Nanodrähte sind flexibel und können sich ohne zu brechen im Durchmesser verdoppeln. Die Nanostrukturierung des Siliziums vergrößert einerseits die Oberfläche zur Aufnahme von Lithium-Ionen und schafft andererseits Platz zur Vermeidung der genannten mechanischen Spannungen.

Gleichwohl ist die Anode von Chan et al. noch nicht reif für die kommerzielle Produktion. Dies liegt vornehmlich am Herstellungsprozess, der umständlich und teuer ist. Das Aufwachsen der Silizium-Nanodrähte mit LVS-Verfahren erfordert Goldpartikel als Nukleationskeime, die an den Spitzen der Nanodrähte verbleiben. Die Nanodrähte selbst sind mit Gold gesättigt, was die Produktion dickerer Drähte oder auf größeren Flächen sehr kostspielig macht. Überdies sind die erhaltenen Nanodrähte nicht homogen. Es gibt dicke und dünne, lange und kurze, aufrecht stehende und gebogene, auf dem Substrat festsitzende und losgelöste Nanodrähte.

Nicht mit dem Metallfilm kontaktierte Silizium-Nanodrähte sind bei der kommerziellen Herstellung besonders unerwünscht. Sie tragen nichts zur Kapazität der Batterie bei, absorbieren aber bei der ersten Beladung dennoch Lithium-Ionen, die nicht mehr extrahierbar sind (irreversible Kapazität). Und natürlich sind im Verfahren nach Chan et al. auch diese mit Gold gesättigt.

Insbesondere die Zyklierfähigkeit der Silizium-Nanodraht-Anode nach Chan et al. ist nach Ausweis neuster Ergebnisse (ECS Konferenz Mai 2009 in San Francisco) nicht allzu gut. Der elektrische Anschluss verschlechtert sich mit der Zahl der Be- und Entladezyklen. Die Volumenvergrößerung des Siliziums führt anscheinend zumindest zu mechanischen Spannungen im Bereich des Kontaktpunktes auf dem Metallfilm, wo die Silizium-Nanodrähte anhaften. Chan et al. schreiben über ihre Nanodrähte: "They also appeared to remain in contact with the current collector, suggesting minimal capacity fade due to electrically disconnected material during cycling." (Nature Nanotechnology 3, 31 (2008)). Dies impliziert, dass sich Nanodrähte während der Zyklen zumindest in geringer Zahl ablösen. Ein optimaler elektrischer Anschluss erfordert aber, dass jeder Nanodraht niederohmig mit der Stromsammelelektrode verbunden ist und vor allem auch bleibt.

Der Stand der Technik kennt Silizium-Nanosäulen-Arrays auch aus einem völlig anderen technischen Bereich, nämlich dem elektrochemischen Porenätzen in Halbleiter-Wafern.

Der Arbeit von van Katz et al. ("Synthesis of Monodisperse High-Aspect-Ratio Colloidal Silicon and Silica Rods", Langmuir 2004, 20, 11201-11207) ist beispielsweise zu entnehmen, dass sich durch Variation des Ätzstromes in p-Typ Silizium der Porendurchmesser variieren lässt. Ab bestimmten Stromstärken beginnen die Poren zu überlappen (Überätzen der Poren), d.h. der erzeugte Porenraum wird über den gesamten geätzten Bereich des Wafers hinweg verbunden. Lediglich Reste der ursprünglichen Porenwände bleiben zurück, und diese stehen als isolierte Säulen vom Wafer ab. Katz et al. brechen die Nanosäulen hiernach durch Abspülen mit Wasser oder Ethanol ab.

Bemerkenswert ist hier der Unterschied zu den Nanosäulen aus der Arbeit von Chan et al.: Alle Säulen sind - infolge der Homogenität des Ätzprozesses - hinsichtlich Länge, Durchmesser und sogar Querschnittsform praktisch gleich. Sie bestehen aus reinem Silizium (ohne Zusätze wie Gold o. ä.) und sind hinsichtlich ihrer Materialstruktur auch alle identisch, da sie aus demselben Wafer gebildet werden.

Der durch Ätzen mit Nanosäulen versehene Silizium-Wafer eignet sich allerdings nicht als Anode einer Lithium-Ionen-Batterie, denn Lithium-Ionen würden auch in den Wafer eindringen und diesen pulverisieren, was die Ablösung aller Nanodrähte zur Folge hätte. Zudem ist Silizium selbst kein guter Leiter und der Wafer folglich kein guter charge collector.

Es ist die Aufgabe der Erfindung, eine Elektrode für eine Lithium-Ionen-Batterie, insbesondere eine Anode, vorzuschlagen, die die Nachteile des Standes der Technik überkommt und insbesondere eine hervorragende Zyklierfähigkeit aufweist.

Die Aufgabe wird gelöst durch eine Elektrode mit dem Merkmal des Anspruchs 1. Die Unteransprüche 2 bis 5 geben vorteilhafte Ausgestaltungen der Elektrode an. Der Nebenanspruch 6 ist auf ein Verfahren zur Herstellung einer Elektrode gemäß Anspruch 1 gerichtet. Die Unteransprüche 7 und 8 bilden das Verfahren gemäß Anspruch 6 fort.

Die erfindungsgemäße Elektrode besteht aus einem gegenüber Lithium-Ionen inerten Metallfilm und einer Mehrzahl auf wenigstens einer Flachseite des Films angeordneter, vom Film abstehender Silizium-Nanodrähte, wobei Teilabschnitte der Nanodrähte vom Metallfilm umschlossen sind. Die Nanodrähte haften erfindungsgemäß nicht - wie im Stand der Technik - nur an der Oberfläche des Metallfilms, sondern sind vielmehr in diesen eingelassen, vergleichbar einer Verankerung von Pfeilern im Erdreich. In einer bevorzugten Ausgestaltung der Elektrode durchdringen Teilabschnitte der Nanodrähte den gesamten Metallfilm von einer Flachseite zur anderen.

Vorzugsweise sind wenigstens die vom Metall umschlossenen Teilabschnitte der Nanodrähte regelmäßig im Innern des Metallfilms angeordnet. Die aus einer Flachseite des Metallfilms herausragenden, abstehenden Teilabschnitte der Nanodrähte sind dann folglich in der Nähe des Films ebenfalls regelmäßig angeordnet, können sich aber in größerem Abstand zum Metallfilm zu Büscheln gruppieren und überhaupt zur Seite neigen. Dies hängt u. a. von der Länge der Nanodrähte P im Verhältnis zur Dicke D des Metallfilms ab, wobei bevorzugt die Länge der vom Metall umschlossenen Teilabschnitte der Nanodrähte auch D beträgt. Die Länge der herausragenden, abstehenden Teilabschnitte, P-D, wird vorzugsweise größer als D eingerichtet.

Der Metallfilm soll aus einem gegenüber Lithium-Ionen inerten Metall bestehen. Dies bedeutet, es sollen keine chemischen Reaktionen der Ionen mit dem Metall stattfinden, und es soll auch nicht zum Einbau der Lithium-Ionen in das Metall kommen. Der Metallfilm besteht bevorzugt aus einem Edelmetall wie Kupfer, Silber, Gold, Platin oder Titan. Besonders bevorzugt ist ein Kupferfilm geeignet.

Es ist ferner möglich, den Metallfilm mit einer zusätzlichen passivierenden Schicht zu versehen. Diese Schicht stört nicht den elektrischen Kontakt zwischen Silizium-Nanodrähten und dem Metallfilm, da dieser im Wesentlichen im Innern des Metallfilms erfolgt.

Das Verfahren zur Herstellung der hier vorgestellten Elektrode geht von einer Anordnung stehender Silizium-Nanodrähte auf einem Silizium-Wafer aus, die durch zunächst elektrochemisches Porenätzen und anschließendes Überätzen der Poren durch die Überreste der Porenwände gebildet wird. Der Silizium-Wafer besteht bevorzugt aus p-Typ Silizium. Das Verfahren sieht weiter das galvanische Abscheiden von Metall aus einer Metallsalzlösung auf dem Wafer vor. Der Metallfilm bildet sich dabei nur auf der Waferoberfläche und umschließt die von dort aufragenden Nanodrähte. Auf den Nanodrähten selbst wird infolge der unzureichenden Raumladungszone kein Metall abgeschieden. Das galvanische Abscheiden wird beendet, sobald die gewünschte Dicke des Metallfilms erzielt worden ist. Der Metallfilm kann elektrisch kontaktiert werden und bildet mit den Silizium-Nanodrähten, die aus der dem Wafer abgewandten Seite des Metallfilms herausragen, die erfindungsgemäße Elektrode.

Es ist vorteilhafterweise möglich, den Metallfilm so dick auszubilden, dass er auch vom Wafer abgelöst werden kann. Das Ablösen kann beispielsweise durch Erwärmen des mit dem Metallfilm versehenen Wafers geschehen. Die Unterschiede in der Wärmeausdehnung von Metall und Silizium verursachen mechanische Spannungen, die die Haftung des Metallfilms an der Oberfläche des Wafers nicht nur überwinden, sondern dabei vom Metall umschlossenen Nanodrähte vom Wafer abreißen. Die Elektrode ist dann eine flexible Metallfolie mit auf einer Flachseite aus der Folie herausragenden, im Übrigen die Folie aber ganz durchdringenden Silizium-Nanodrähten.

Das Ablösen des Metallfilms vom Wafer bedarf noch einiger Optimierungen hinsichtlich seiner Kontrollierbarkeit, jedoch lässt sich das Ablösen besonders leicht bei einem Kupferfilm beobachten. Dies und weitere Einzelheiten zum Herstellungsverfahren sowie zur Kapazität und Zyklierfähigkeit der Elektrode werden nachfolgend anhand von Figuren näher beschrieben.
- Fig. 1: zeigt die Aufsicht auf einen p-Typ Silizium-Wafer, der mit Makroporen von ca. 1,6 µm Durchmesser versehen ist.
- Fig. 2: zeigt den Wafer aus Fig. 1 nach einer chemischen Überätzung der Poren, der jetzt abstehende Nanodrähte (Durchmesser ca. 350 nm) aufweist, die die Überreste der ursprünglichen Porenwände sind. Im Bildhintergrund ist der Wafer zu erkennen.
- Fig. 3: ist eine Skizze des Querschnitts durch den Wafer aus Fig. 2, auf dem zusätzlich eine Metallschicht abgeschieden worden ist.
- Fig. 4: zeigt die Elektronenmikroskop-Aufnahme eines Querschnitts durch den Wafer mit Metallfilm und Nanodrähten, wobei die Nanodrähte einen vom Metallfilm umschlossenen Teilabschnitt und einen aus der Oberseite des Metallfilms herausragenden Teilabschnitt aufweisen. Im Bereich der Aufnahme hat sich der Metallfilm vom Wafer abgelöst und dabei die Nanodrähte abgerissen.
- Fig. 5: stellt die gemessene Ladung, die in die Elektrode eingespeist und wieder entnommen wird (Ladezyklus), graphisch dar. Über die fast 40 gezeigten Ladezyklen ist kein signifikanter Abfall der Ladekapazität erkennbar.
- Fig. 6: ein Plot des Verhältnisses von entnommener zu eingespeister Energie. Die Effizienz liegt im Rahmen der Messgenauigkeit praktisch bei 100 %, sobald die initialen Verluste an Lithium-Ionen (irreversible Kapazität) stattgefunden haben.

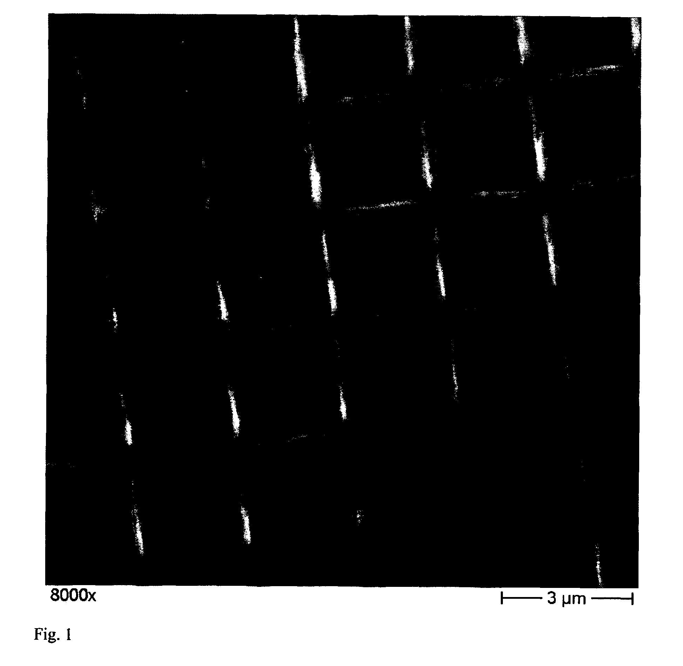

In Fig. 1 ist das Ergebnis eines an sich bekannten elektrochemischen Ätzprozesses zu sehen. Es werden bevorzugt lithographisch vorstrukturierte p-Typ Silizium Wafer verwendet, mit einer (eher ungewöhnlichen) Anordnung der Porenkeime in einem quadratischen Gitter. Die Lithographie ist dabei nicht anspruchsvoll. Die Anordnung der Porenkeime in einem quadratischen Gitter ist nicht wesentlich, aber vorteilhaft, da sich so dickere Nanodrähte mit etwa quadratischem Querschnitt bilden lassen. Makroporen sind sogar noch besser in n-Typ Silizium herstellbar. Allerdings erfordert das Ätzen von n-Typ Silizium die Rückseitenbeleuchtung des Wafers und eine sehr viel aufwendigere - gleichwohl beherrschte - Prozesskontrolle. Für die Verwendung als Batterieelektrode spielt die Dotierung des Siliziums keine Rolle.

### Ausführungsbeispiel 1:

### Makroporen in p-Typ Silizium durch Ätzen einer Si-Wafer Probe

Die Probe wird in einer elektrochemischen Ätzzelle galvanostatisch 2 Minuten lang bei 5 mA geätzt. Der Elektrolyt besteht dabei aus HF 5wt% in reinem Dimethylformamid (DMF). Nach 5 Minuten erfolgt ein linearer Anstieg des Stromes von 5 mA auf 25 mA. Nach weiteren 105 Minuten erfolgt ein linearer Abfall desselben von 25 mA auf 10 mA.

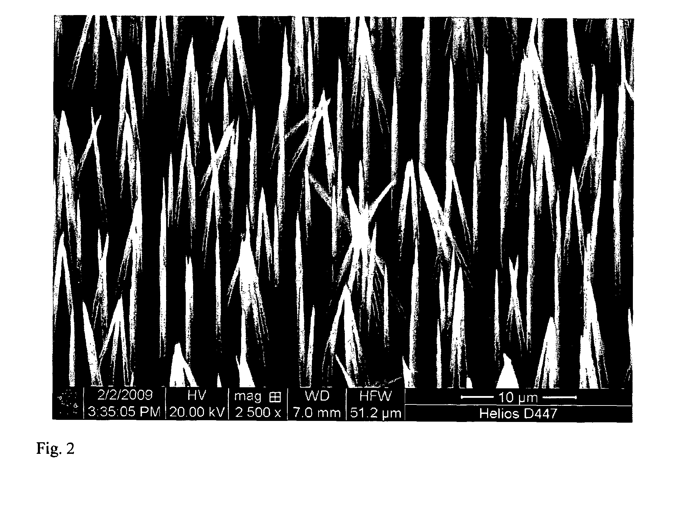

Als Versuchselektroden werden ca. 1 cm² große Stücke aus dem Wafer heraus präpariert. Für die Versuchselektroden werden 160 µm tiefe Poren mit Durchmessern von etwa 1.6 µm erzeugt. Die Figuren 2 bis 4 zeigen indes Beispiele mit nur 55 µm Porentiefe. Porentiefe, Anordnung, Durchmesser und Form der Poren lassen sich nach dem Stand der Technik in weiten Bereichen, wenn auch nicht alle unabhängig voneinander, variieren.

Die Erzeugung von Nanodrähten auf dem Silizium-Wafer erfolgt durch Überätzen der zunächst gebildeten Makroporen. Dies ist beispielsweise elektrochemisch (vgl. Katz et al.) oder auch nasschemisch möglich und ebenfalls an sich dem Fachmann geläufig. Beim Überätzen werden die Wände der Poren langsam aufgelöst. Dies geschieht isotrop, d.h. in allen Richtungen gleichmäßig. Damit in der Mitte zwischen vier Poren ein Nanodraht gebildet wird, ist insbesondere eine Wahl von etwa 2 : 1 für das Verhältnis Porenabstand zu Porendurchmesser vorteilhaft.

### Ausführungsbeispiel 2:

### Überätzen der Makroporen

Die Präparate aus dem porösen Wafer werden mit einer Ätzlösung der folgenden Zusammensetzung benetzt:

| | | | | |
|---|---|---|---|---|
| Chemikalie | 48 %HF | 65 % HNO₃ | 99 % Ethanol | 96 % CH₃COOH |
| Mischung Vol. % | 6 % | 16 % | 30 % | 48 % |

Die aktive (oxidierende) Komponente in der Lösung ist salpetrige Säure (HNO₂), welche immer in einem Gleichgewicht mit Salpetersäure (HNO₃) vorliegt. Um die Lösung zusätzlich zu aktivieren, wird vor der eigentlichen Ätzung ein Stück Silizium in der Lösung aufgelöst. Durch die Reaktion erfolgt eine Gleichgewichtsverschiebung in Richtung der HNO₂, wodurch nachfolgende Ätzung der porösen Probe effektiver (schneller) erfolgt. In solch einer aktivierten Lösung wird die Probe für 20-24 Stunden bei konstanter Temperatur von 19°C geätzt.

Das Ergebnis sind freistehende Nanodrähte auf dem Wafer, die aus den Überresten der Porenwände bestehen. Beispielhaft ist eine Elektronenmikroskop-Aufnahme als Fig. 2 zu sehen.

Die Geometrie der Nanodrähte resultiert aus der Kristallstruktur des Siliziums. Nach dem ersten Beladen der Nanodrähte mit Lithium werden die Nanodrähte amorph. Der äußere Habitus optimiert sich danach entlang anderer Parameter; die Nanodrähte werden rund (zylinderförmig).

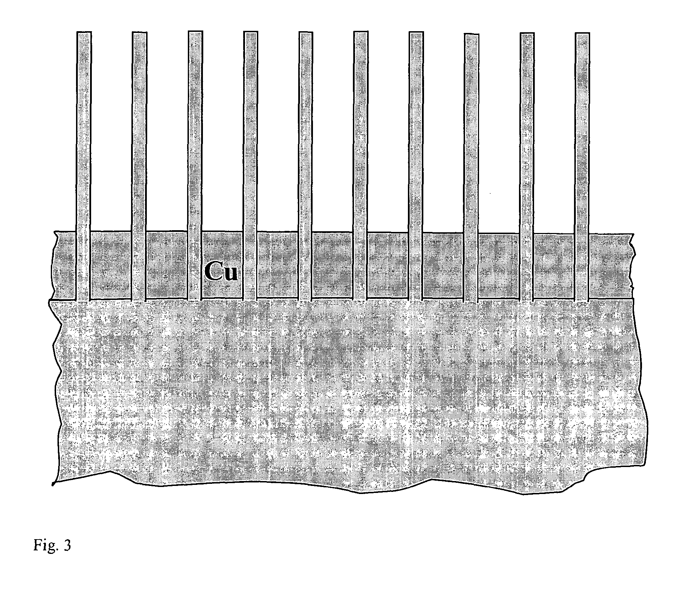

Der wesentliche Schritt zur Herstellung der Elektrode für Lithium-Ionen Batterien ist nun das galvanische Abscheiden eines gegenüber Lithium-Ionen inerten Metalls, vorzugsweise Kupfer, auf den Wafer mit dem Silizium-Nanosäulen-Array. Kupfer ist nicht nur gegenüber Lithium inert, sondern auch der bevorzugte elektrische Anschluss. Die Zielstruktur ist in Fig. 3 skizziert.

Bei der galvanischen Abscheidung des Metalls sollen die Nanodrähte selbst möglichst wenig vom Metall bedeckt werden. Die über den beschriebenen Prozess hergestellten Nanodrähte (p-Typ Silizium) sind elektrisch isolierend, weil sie unter Spannung nur noch eine Raumladungszone enthalten. Bei der galvanischen Abscheidung fließt somit kein Strom durch die Nanodrähte und es wird kein Metall auf die Nanodrähte deponiert.

Sollten die Silizium-Nanodrähte nach der Herstellung eine höhere Leitfähigkeit aufweisen - etwa, weil sie aus n-Typ Silizium gebildet worden sind -, so könnten sie nach dem Ätzprozess noch nachträglich umdotiert werden, um eine Abscheidung von Metall auf den Nanodrähten zu verhindern.

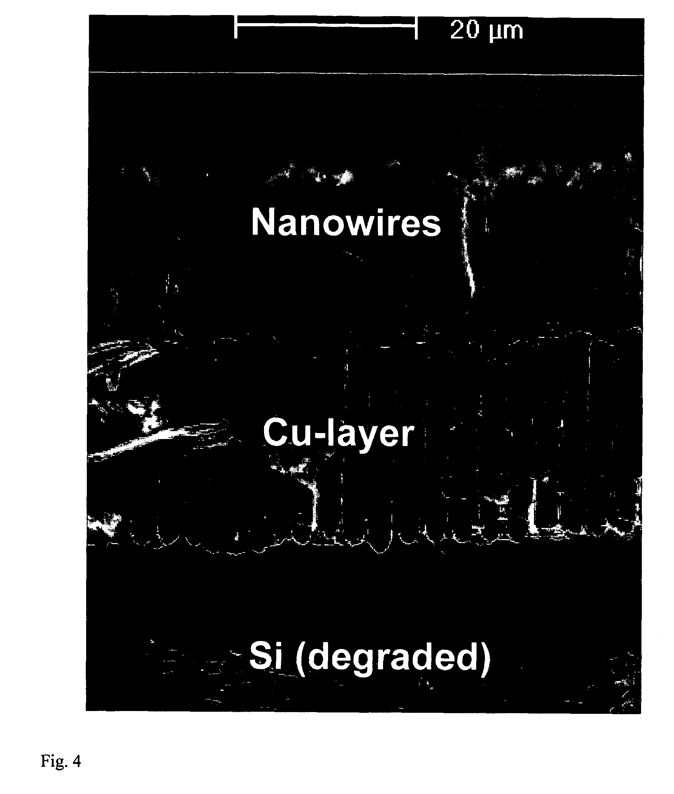

Der galvanisch abgeschiedene Metallfilm wird unmittelbar auf der Oberfläche des Wafers im Bereich der ehemaligen Porenspitzen (mithin an den Fußpunkten der Nanodrähte) gebildet. Die Filmdicke nimmt mit der Dauer des Galvanisierens zu, und der Film umschließt einen Teilabschnitt jedes Nanodrahtes, wobei die Länge des umschlossenen Teilabschnitts mit der Filmdicke zunimmt. Schließlich ist ein Metallfilm geschaffen, der auf einer Flachseite herausragende Silizium-Nanodrähte aufweist, die jeweils vom Metallfilm umschlossene Teilabschnitte besitzen. Die Nanodrähte sind praktisch im Metallfilm verankert. Diese Verankerung ist stark genug, dass der Metallfilm beim Abheben vom Substrat die Nanodrähte vom Wafer abreißt, was in Fig. 4 gut zu sehen ist.

### Ausführungsbeispiel 3:

### Galvanische Kupfer-Abscheidung auf geätztem Silizium-Wafer

Die Bildung eines Kupferfilms erfolgt durch Galvanisieren des geätzten, mit einem Nanosäulen-Array versehenen Wafers für ca. 20 Stunden bei etwa 20°C und konstantem Abscheidepotenzial von - 0.5 V gegenüber Platin. Die Salzlösung weist folgende Zusammensetzung auf:

| | | | | | | |
|---|---|---|---|---|---|---|
| Zusammensetzung | H₂O | H₂SO₄ | CuSO₄ | PEG | DTAC | SPC |
| In ml und g. | 300 ml | 70 ml | 5 g | 0.1 g | 0.1 g | 0.1 g |

| | | | | | | |
|---|---|---|---|---|---|---|
| DTAC: 1-(Dodecyl) trimethylammonium chloride SPC: Bis (3-sulfopropyl) disulfide PEG: Poly (ethyleneglycol) | | | | | | |

Der Kupferfilm sollte wenigstens 1 µm dick sein, vorzugsweise einige 10 µm dick. Bei ausreichender Länge der Nanodrähte kann die Filmdicke auch einige 100 µm betragen. Die aus dem Metallfilm herausragenden Teilabschnitte der Nanodrähte sollten wenigstens eine Länge von 5 µm aufweisen.

Fig. 4 zeigt einen Schnitt durch eine etwa 20 µm dicke Kupferfolie, die auf dem durch Ätzen mit einem Nanosäulen-Array versehenen Wafer galvanisch abgeschieden wurde. Durch Temperung der mit Kupfer beschichteten Proben bei etwas über 100°C für ca. 60 min, löst sich die Kupferschicht vom Silizium-Wafer ab. Die regelmäßig parallel verlaufenden Linien in der Kupferfolie (Bildmitte) sind die vom Kupferfilm umschlossenen Teilabschnitte der Nanodrähte, die aus der Oberseite des Films herausragen. Am unteren Bildrand von Fig. 4 sind Reste des Silizium-Wafers zu sehen, die offenbar während der (weiter unten beschriebenen) Ladezyklen durch Risse im Film mit Lithium-Ionen in Kontakt gekommen und dadurch pulverisiert ("degraded") worden sind.

Der abgelöste Kupferfilm mit Nanodrähten ist flexibel und lässt sich im Prinzip auf der Rückseite sehr gut kontaktieren. Die Präsenz des Silizium-Wafers ist hingegen ohne Bedeutung für die Funktion des Metallfilms als Elektrode. Der Wafer kann daher entfernt und sogar für die weitere Produktion wieder verwendet werden.

Es kann allerdings praktisch einfacher sein, den Wafer als Träger des Metallfilms zu belassen, da das Ablösen des Metallfilms natürlich mit einer Krafteinwirkung auf den Film verbunden ist, die die Nanostrukturen beschädigen könnte. Die Optimierung des Ablösens des Metallfilms stellt eine eigene Aufgabe dar, auf die hier nicht weiter eingegangen werden soll.

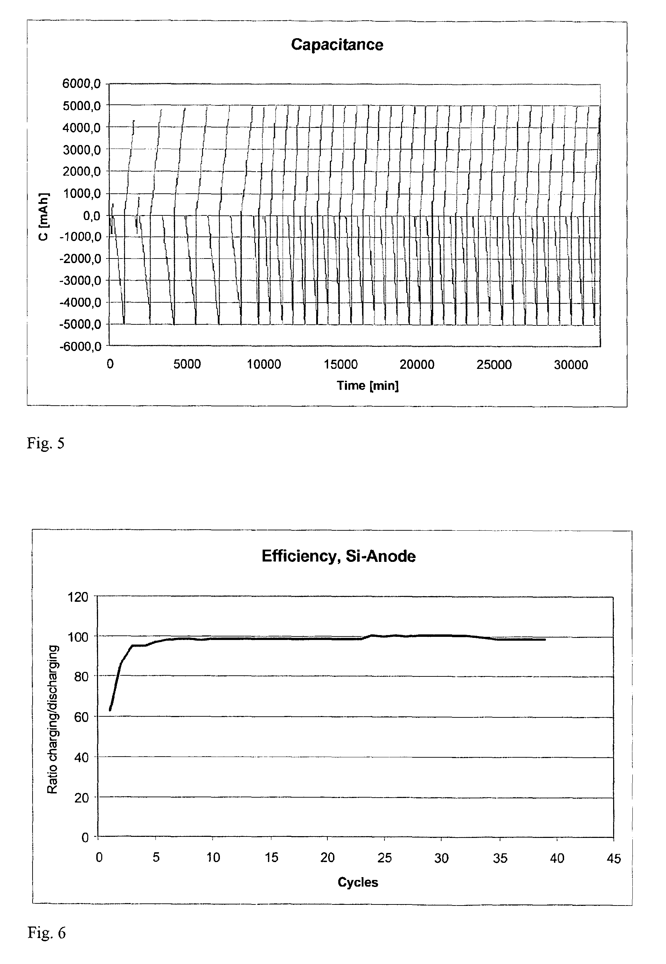

Die Eigenschaften des Metallfilms mit Nanodrähten als Elektrode einer Lithium-Ionen Batterie werden anhand der Figuren 5 und 6 verdeutlicht.

In Fig. 5 wird die gemessene Ladung gezeigt, die in aufeinander folgenden Be- und Entladezyklen in die Elektrode eingespeist (negativ) und wieder entnommen (positiv) wird, wobei ein einzelner Zyklus über 12 Stunden dauert. Die Messungen erfolgen in einer herkömmlichen Halbzelle für Batterieforschung mit einer Referenzelektrode aus Li/Li⁺ Metall, einem Separator aus Glasvlies und 0,5 ml Elektrolyt. Der Elektrolyt besteht aus Dimethylcarbonat und E-thylencarbonat im Verhältnis 1:1 plus ein Mol des Leitsalzes LiPF₆. Die zu prüfende Gegenelektrode, in diesem Fall die Silizium-Nanodraht Anode, wird mit einem zusätzlichen Kupferring auf dem Probenrand in der Halbzelle angeordnet. Auf diese Weise erfolgt die Kontaktierung des Metallfilms von der Vorderseite, so dass er nicht vom Wafer abgelöst werden muss.

Die Daten der runden, etwa 8 mm durchmessenden Versuchselektroden lauten wie folgt: Nanodrahtdurchmesser: 0,75 µm, Nanodrahtlänge 160 µm, Kupferschichtdicke: 20 µm, Anzahl der Nanodrähte: ca. 6,646 Millionen, berechnetes Gewicht der Nanodrähte: 1,2 mg, theoretische Beladung: 5,12 mAh, gemessene Beladung: 5,045 mAh.

Damit liegt die realisierte Kapazität der Elektroden fast beim theoretischen Maximum von 4200 mAh/g und so tatsächlich etwa beim 11-fachen der Kapazität einer heute gängigen Graphitelektrode.

Es ist in Fig. 5 klar erkennbar, dass die Ladekapazität nach den ersten zwei Zyklen von ausgezeichneter Stabilität ist. In den Anfangszyklen werden Lithium-Ionen in die reinen Silizium-Nanodrähte eingebaut, die sich nicht mehr extrahieren lassen (irreversible Kapazität), was ein bekannter und unvermeidlicher Vorgang ist. Mit effektiv 12 % liegt die irreversible Kapazität hier aber sogar im Bereich des theoretisch möglichen Minimums.

In Fig. 6 ist das Verhältnis von entnommener zu eingespeister Leistung über fast 40 Zyklen angegeben. Diese liegt im Rahmen der Messgenauigkeit bei 100 %. Eine Verschlechterung bzw. Alterung der Elektrode ist nach 40 Be- und Entladezyklen noch nicht auszumachen. Damit besteht eine realistische Aussicht, zu den am Markt erforderlichen Zyklenzahlen von 500 und mehr zu gelangen.

Der Hauptgrund für die exzellenten Eigenschaften der Elektrode wird in der Verankerung der Nanodrähte im Metallfilm gesehen. Allem Anschein nach Lösen sich praktisch keine Nanodrähte vom Film ab trotz ihrer sich wiederholenden Expansion auf vierfaches Volumen durch den Einbau der Lithium-Ionen. Die Expansion findet wohl nicht im Innern des Metallfilms statt, denn sonst wäre eine Aufweitung der Kanäle im Metall, in denen die Nanodrähte sitzen, vermutlich erkennbar, da man eine irreversible Verformung des Metalls unterstellen dürfte. Wahrscheinlich dringen die Lithium-Ionen schlicht nicht in den Metallfilm vor, und das Abreißen der Teilabschnitte (expandiert außerhalb und nicht expandiert innerhalb des Metallfilms) voneinander erfordert offenbar größere mechanische Kräfte.

Es sollte noch betont werden, dass die einzelnen Schritte des hier beschriebenen Herstellungsverfahrens gut beherrschte Prozesse sind, in denen sich aus fachmännischem Können heraus zahllose Ansätze für weitere Optimierungen ergeben. Gerade bei der Galvanik sind durch das Aufsuchen günstiger Prozessparameter erheblich kürzere Prozessdauern zu erwarten. Die Ätzvorgänge hingegen sind in ihrer Zeitcharakteristik nur noch in Grenzen zu beschleunigen, aber es kommt hier auch sehr auf die Qualität der Strukturierung und auf die Gleichmäßigkeit der Poren und der Nanosäulen-Arrays an.

Hinsichtlich Homogenität und Kontrollierbarkeit der erzeugten Nanodraht-Arrays ist das Porenätzen mit anschließendem Überätzen eines Wafers gegenüber den schwer zu kontrollierenden "assembling procedures" (z.B. LVS) klar überlegen. Hinzu kommt, dass man in der Wahl des Nanodraht-Durchmessers nicht auf den üblichen Bereich um etwa 100 nm festgelegt ist, sondern auch sehr viel dickere Mikrodrähte in der gleichen Weise bilden kann. Der Begriff Silizium-Nanodraht soll im Kontext der vorliegenden Erfindung auch Silizium-Drähte bis 10 µm Durchmesser umfassen.

Die Technologie der elektrochemischen Porenätzung ist derzeit im Begriff zu einem kommerzialisierten Standardverfahren zu werden, für das rechnergesteuertes High-Tech-Equipment bereits am Markt erhältlich ist. Eine Batterieelektrode der hier beschriebenen Art sollte deshalb in absehbarer Zeit für einen akzeptablen Preis angeboten werden können.

Der Metallfilm mit den darin verankerten Silizium-Nanodrähten, die aus einer Flachseite des Films herausragen ist als solcher eine - zumindest im Bereich der Batterieelektroden - neue Struktur. Er kann mit keinem der bislang verwendeten Verfahren zur Herstellung von Silizium-Nanodraht-Elektroden erzeugt werden.

Das beschriebene Verfahren auf der Basis überätzter Silizium-Wafer erlaubt sowohl die regelmäßige Anordnung der Nanodrähte im Innern des Metallfilms als auch die maximal mögliche Verankerung, in dem Sinne, dass die Nanodrähte den Metallfilm vollständig von einer Flachseite zur anderen durchqueren, also maximal tief in den Film eindringen.

Die mechanische Stabilisierung der Nanodrähte durch die in den Metallfilm eingelassenen Teilabschnitte wird hier erstmals berichtet und scheint das Zyklierfähigkeitsproblem von Silizium-Nanodraht-Elektroden fundamental zu lösen.

## Patentansprüche

1. Elektrode für Lithium-Ionen Akkumulatoren mit einem gegenüber Lithium-Ionen inerten Metallfilm und einer Mehrzahl wenigstens auf einer Flachseite des Films angeordneter, vom Film abstehender Silizium-Nanodrähte, wobei Teilabschnitte der Nanodrähte vom Metallfilm umschlossen sind,
**dadurch gekennzeichnet, dass** der Metallfilm wenigstens 1 Mikrometer dick ist.

2. Elektrode nach Anspruch 1, **gekennzeichnet durch** eine regelmäßige Anordnung wenigstens der vom Metallfilm umschlossenen Teilabschnitte der Silizium-Nanodrähte.

3. Elektrode nach einem der vorangehenden Ansprüche, **dadurch gekennzeichnet, dass** die vom Metallfilm umschlossenen Teilabschnitte der Silizium-Nanodrähte die gesamte Filmdicke durchqueren.

4. Elektrode nach einem der vorangehenden Ansprüche, **dadurch gekennzeichnet, dass** der gegenüber Lithium-Ionen inerte Metallfilm aus einem Elementmetall aus der Gruppe Kupfer, Silber, Gold, Platin oder Titan gebildet ist.

5. Elektrode nach einem der vorangehenden Ansprüche, **dadurch gekennzeichnet, dass** die aus dem Metallfilm herausragenden Silizium-Nanodrähte eine Länge von wenigstens 5 Mikrometern aufweisen.

6. Verfahren zur Herstellung einer Elektrode für Lithium-Ionen-Akkumulatoren **gekennzeichnet durch** die Schritte:
a. Elektrochemisches Ätzen eines Silizium-Wafers unter Erzeugung von Poren in einer vorab gewählten Anordnung bis zu einer vorgegebenen Porentiefe P,
b. Überführen der Porenwände in stehende, am Wafer befestigte Nanodrähte vorgegebener Dicke **durch** Überätzen der Poren,
c. Bilden eines Films vorgegebener Dicke D aus einem gegenüber Lithium-Ionen inerten Metall **durch** galvanisches Abscheiden auf der geätzten Seite des Wafers,
wobei der Metallfilm die befestigten Enden der Nanodrähte umschließt und die Nanodrähte aus der dem Wafer abgewandten Flachseite um etwa die Länge P - D herausragen.

7. Verfahren nach Anspruch 6, **dadurch gekennzeichnet, dass** der Metallfilm unter gleichzeitigem Abreißen der Nanodrähte vom Wafer abgelöst wird.

8. Verfahren nach Anspruch 7, **dadurch gekennzeichnet, dass** der Wafer mit dem darauf angeordneten Metallfilm erwärmt wird und sich der Metallfilm infolge seiner Wärmeausdehnung vom Wafer ablöst.

## Claims

1. Electrode for lithium-ion accumulators comprising a metal film that is inert in relation to lithium ions and a plurality of silicon nanowires projecting from the film at least on a flat side of the film, wherein part sections of the nanowires are enclosed by the metal film,
**characterised in that** the metal film is at least 1 micrometre thick.

2. Electrode in accordance with claim 1, **characterised by** a regular arrangement at least of the part sections of the silicone nanowires enclosed by the metal film.

3. Electrode in accordance with one of the preceding claims, **characterised in that** the part sections of the silicone nanowires enclosed by the metal film pass through the full thickness of the film.

4. Electrode in accordance with one of the preceding claims, **characterised in that** the metal film inert in relation to lithium ions is formed from an elemental metal from the group comprising copper, silver, gold, platinum or titanium.

5. Electrode in accordance with one of the preceding claims, **characterised in that** the silicone nanowires projecting from the metal film have a length of at least 5 micrometres.

6. Method for producing an electrode for lithium ion accumulators **characterised by** the steps:
a. electrochemical etching of a silicon wafer creating pores in a previously chosen arrangement down to a predetermined pore depth P,
b. converting the pore walls into standing nanowires secured to the wafer of predetermined thickness by over-etching the pores,
c. forming a film of predetermined thickness D from a metal inert in relation to lithium ions by electrodeposition on the etched side of the wafer,
with the metal film enclosing the secured ends of the nanowires and the nanowires projecting from the flat side facing away from the wafer by approximately the length P - D.

7. Method in accordance with claim 6, **characterised in that** the metal film is separated from the wafer with simultaneous separation of the nanowires.

8. Method in accordance with claim 7, **characterised in that** the wafer with the metal film arranged thereon is heated and the metal film separates itself from the wafer as a result of its thermal expansion.

## Revendications

1. Électrode à accumulateurs lithium-ion avec un film métallique inerte vis-à-vis des ions lithium et une majorité de nanofils de silicium saillants du film disposés au moins sur un côté plat du film, des sections partielles des nanofils étant entourées par le film métallique,
**caractérisée en ce que** le film métallique présente une épaisseur de 1 micromètre minimum.

2. Électrode selon la revendication 1, caractérisée en une disposition régulière au moins des sections partielles des nanofils de silicium entourées par le film métallique.

3. Électrode selon l'une des revendications précédentes, **caractérisée en ce que** les sections partielles des nanofils de silicium entourées par le film métallique traversent toute l'épaisseur du film.

4. Électrode selon l'une des revendications précédentes, **caractérisée en ce que** le film métallique inerte vis-à-vis des ions lithium est formé d'un élément chimique métallique provenant du groupe cuivre, argent, or, platine ou titane.

5. Électrode selon l'une des revendications précédentes, **caractérisée en ce que** les nanofils de silicium débordant du film métallique présentent une longueur de 5 micromètres minimum.

6. Procédé de fabrication d'une électrode pour des accumulateurs lithium-ion **caractérisé par** les étapes suivantes :
a. Gravure électrochimique d'une galette de silicium pour produire des pores selon une disposition sélectionnée préalablement jusqu'à obtenir une profondeur de pore P prédéfinie,
b. Transfert des parois de pores par surgravure des pores dans des nanofils stationnaires au niveau de la galette d'une épaisseur prédéfinie,
c. Formation d'un film d'une épaisseur prédéfinie D en un métal inerte vis-à-vis des ions lithium par dépôt galvanique sur le côté gravé de la galette,
le film métallique entourant les extrémités fixées des nanofils et lesdits nanofils débordant du côté plat opposé à la galette d'une longueur d'environ P - D.

7. Procédé selon la revendication 6, **caractérisé en ce que** le film métallique est détaché de la galette par arrachement simultané des nanofils.

8. Procédé selon la revendication 7, **caractérisé en ce que** la galette est chauffée avec le film métallique disposé dessus et que le film métallique se détache de la galette suite à sa dilatation thermique.
